# EUROPÄISCHE PATENTSCHRIFT

(11) **EP 2 096 732 B1**
(45) Veröffentlichungstag und Bekanntmachung des Hinweises auf die Patenterteilung: **01.09.2010**
(21) Anmeldenummer: 08152006.6
(22) Anmeldetag: 27.02.2008
(51) Int. Cl.: H02J 3/38, H02J 3/28, H02K 16/04

(54) **Energiesystem umfassend eine Wind- oder Wasserkraftturbine**
Energy system comprising a wind or water turbine
Système d'énergie comprenant une éolienne ou une turbine hydraulique

(43) Veröffentlichungstag der Anmeldung: 02.09.2009
(73) Patentinhaber: ABB Schweiz AG, 5400 Baden (CH)
(72) Erfinder: Maibach, Philippe, CH-5037 Muhen (CH); Eichler, Markus, D-79761, Waldshut (DE); Steimer, Peter, CH-5420, Ehrendingen (CH)
(74) Vertreter: ABB Patent Attorneys

(56) Entgegenhaltungen:
- WO-A-02/15367
- DE-A1-102005 044 341
- US-A- 5 225 712
- ROSSOUW E ET AL: "Use of Air-Cored Axial Flux Permanent Magnet Generator in Direct Battery Charging Wind Energy Systems" POWER ELECTRONICS AND DRIVE SYSTEMS, 2007. PEDS '07. 7TH INTERNATIONAL CONFERENCE ON, IEEE, PISCATAWAY, NJ, USA, 27. November 2007 (2007-11-27), Seiten 1102-1107, XP031242652 ISBN: 978-1-4244-0644-9

## Beschreibung

### Technisches Gebiet

Die Erfindung bezieht sich auf das Gebiet der erneuerbaren Energien. Sie geht aus von einem Energiesystem gemäss dem Oberbegriff des unabhängigen Anspruchs.

### Stand der Technik

Windenergiesysteme, wie sie heute aufgrund schwindender Energieressourcen verstärkt als alternative Energielieferanten eingesetzt werden, werden gängigerweise an Land oder vor der Küste im Meer errichtet. Gezeitenkraftenergiesysteme wiederum werden typischerweise auf dem Meeresboden installiert, wobei der Tidenhub oder die Strömung des Meerwassers als primäre Energiequelle ausgenutzt wird.

Ein gattungsgemässes Windenergiesystem ist in "Power Quality Measurements Performed on a Large Wind Park at Low and Medium Voltage Level", E. Ghiani et al, International Conference on Power System Transients, 4.-7. Juni 2007 angegeben. Darin weist das Windenergiesystem eine Windkraftturbine auf, welche mit einem Generator verbunden ist, wobei der Generator typischerweise mindestens zwei Statorwicklungen umfasst. Die Statorwicklungen sind mit einem Transformator verbunden, welcher der Erzeugung einer hohen Wechselspannung dient, wodurch dann die diesbezügliche elektrische Energie verlustarm und effizient weitertransportiert werden kann. WO 0215367 offenbart ein gattungsgemässes Energiesystem umfassend eine Windenergieanlage, wobei der Generator zwei Statoren mit jeweils zwei Wicklungen aufweist, und jeder Statorwicklung ein Gleichrichter zugeordnet ist. Jedem Stator ist ein Transformator zugeordnet, um das Energiesystem an das Netzwerk anzuschliessen.

Gerade aber bei Windenergiesystemen, die im Meer Off-Shore installiert sind oder bei Gezeitenkraftenergiesystemen, welche typischerweise unter der Wasseroberfläche installiert sind, ist ein Transformator, insbesondere Öltransformatoren, aus Installationsgründen sowie aus Wartungsgründen nicht erwünscht. Zudem steigen die Ausfallraten und die Anfälligkeit des Energiesystems stark an und die Verfügbarkeit nimmt dementsprechend ab, falls der Transformator nicht hinreichend und regelmässig gewartet wird.

### Darstellung der Erfindung

Aufgabe der Erfindung ist es deshalb, ein Energiesystem anzugeben, welches einfach aufgebaut und robust ist und ohne Transformator auskommt. Diese Aufgabe wird durch die Merkmale des Anspruchs 1 gelöst. In den abhängigen Ansprüchen sind vorteilhafte Weiterbildungen der Erfindung angegeben.

Das erfindungsgemässe Energiesystem umfasst eine Windkraftturbine oder Wasserkraftturbine, welche mit einem Generator verbunden ist, wobei der Generator mindestens zwei Statorwicklungen aufweist. Nach der Erfindung ist nun jeder Statorwicklung jeweils eine Gleichrichtereinheit zugeordnet und jede Statorwicklung ist mit der Wechselspannungsseite der zugeordneten Gleichrichtereinheit verbunden. Die Anzahl Gleichrichtereinheiten entspricht somit der Anzahl der Statorwicklungen. Ferner ist jeder Gleichrichtereinheit jeweils ein Energiespeicherkreis zugeordnet und jede Gleichrichtereinheit ist an der Gleichspannungsseite mit dem zugeordneten Energiespeicherkreis verbunden. Die Anzahl Energiespeicherkreise entspricht somit der Anzahl der Gleichrichtereinheiten. Weiterhin sind die Energiespeicherkreise seriell miteinander verbunden. Die mindestens zwei Gleichrichtereinheiten erzeugen auf der jeweiligen Gleichspannungsseite, d.h. am zugehörigen Energiespeicherkreis, eine Gleichspannung, wobei sich durch die Serienschaltung der Energiespeicherkreise die Gleichspannungen addieren, so dass sich vorteilhaft eine hohe Gesamtgleichspannung über den Energiespeicherkreisen ergibt. Ein Transformator zur Erzeugung einer hohen Wechselspannung wird dadurch überflüssig und kann mit Vorteil eingespart werden. Mittels einer Mittelspannungs-Gleichstrom-Übertragung oder einer Hochspannungs-Gleichstrom-Übertragung (HGÜ) lässt sich beispielsweise dann die diesbezügliche elektrische Energie verlustarm und effizient weitertransportieren. Da das erfindungsgemässe Energiesystem keinen Transformator aufweist, entfällt auch eine aufwendige Installation und Wartung, wodurch das Energiesystem insgesamt einfacher und robuster wird und sich durch eine hohe Verfügbarkeit auszeichnet.

Diese und weitere Aufgaben, Vorteile und Merkmale der vorliegenden Erfindung werden aus der nachfolgenden detaillierten Beschreibung von bevorzugten Ausführungsbeispielen der Erfindung in Verbindung mit der Zeichnung offensichtlich.

### Kurze Beschreibung der Zeichnungen

Es zeigt:
- Fig. 1: eine erste Ausführungsform des erfindungsgemässen Energiesystems,
- Fig. 2: eine zweite Ausführungsform des erfindungsgemässen Energiesystems,
- Fig. 3: eine dritte Ausführungsform des erfindungsgemässen Energiesystems und
- Fig. 4: eine vierte Ausführungsform des erfindungsgemässen Energiesystems.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

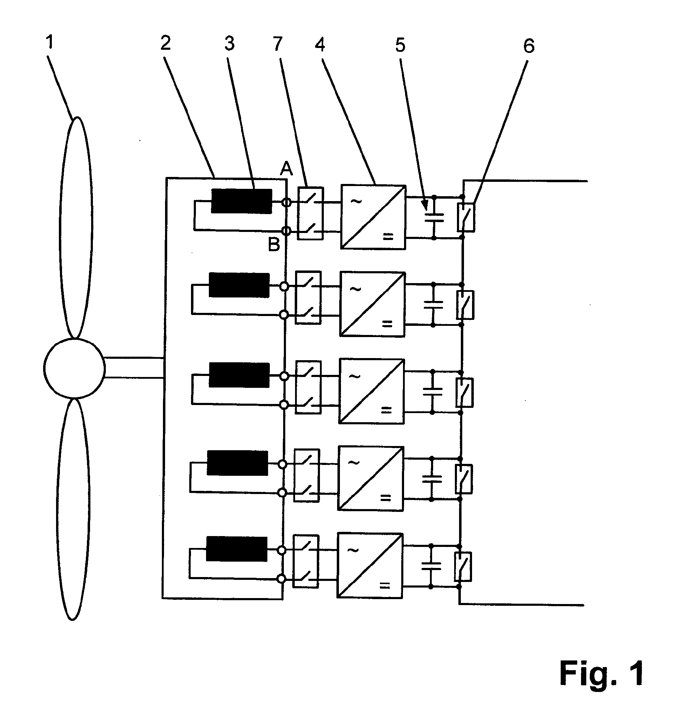

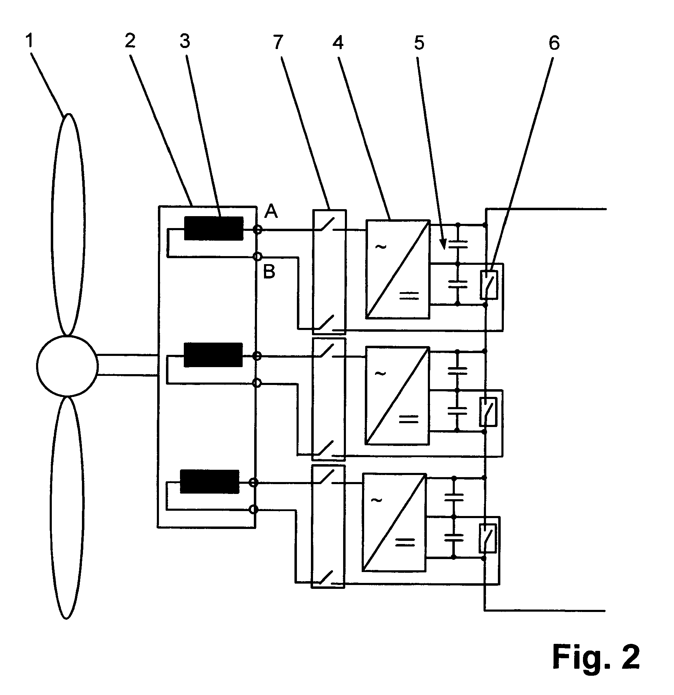

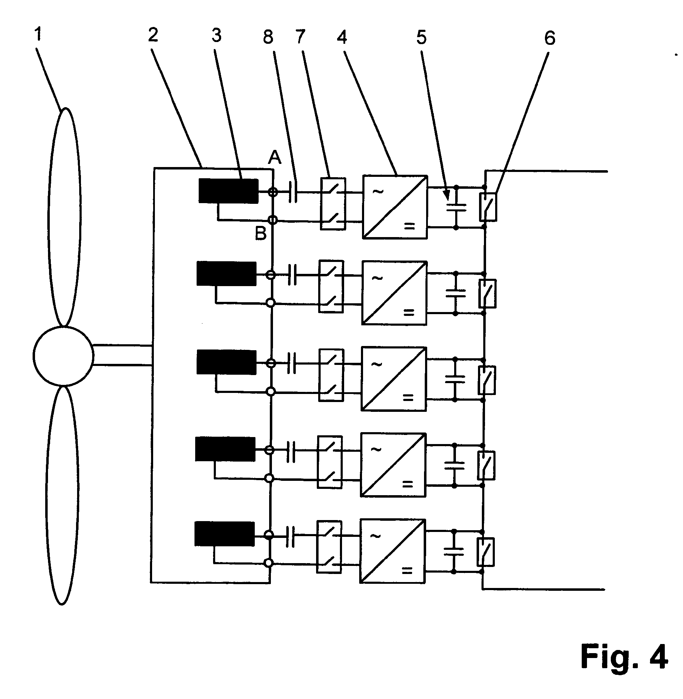

In Fig. 1 ist eine erste Ausführungsform des erfindungsgemässen Energiesystems dargestellt. Das Energiesystem umfasst eine Windkraftturbine 1, beispielsweise im Falle eines Windenergiesystems, oder eine Wasserkraftturbine 1, beispielsweise im Falle eines Gezeitenkraftenergiesystems, welche mit einem Generator 2 verbunden ist, wobei der Generator 2 mindestens zwei Statorwicklungen 3 aufweist. Jegliche Art von Generator, wie beispielsweise Synchronmaschine, Asynchronmaschine, Permanentmagnetmaschine, Reluktanzmaschine etc., ist denkbar. Erfindungsgemäss ist nun allgemein jeder Statorwicklung 3 jeweils eine Gleichrichtereinheit 4 zugeordnet und jede Statorwicklung 3 ist mit der Wechselspannungsseite der zugeordneten Gleichrichtereinheit 4 verbunden. Die Anzahl Gleichrichtereinheiten 4 entspricht demnach der Anzahl der Statorwicklungen 3. Ferner ist jeder Gleichrichtereinheit 4 jeweils ein Energiespeicherkreis 5 zugeordnet und jede Gleichrichtereinheit 4 ist an der Gleichspannungsseite mit dem zugeordneten Energiespeicherkreis 5 verbunden. Die Anzahl Energiespeicherkreise 5 entspricht damit der Anzahl der Gleichrichtereinheiten 4. Weiterhin sind die Energiespeicherkreise 5 seriell miteinander verbunden. Die in Fig. 1 gezeigte Ausführungsform weist beispielsweise fünf Statorwicklungen 3 und somit auch fünf Gleichrichtereinheiten 4 und somit auch fünf Energiespeicherkreise 5 auf. Die allgemein mindestens zwei Gleichrichtereinheiten 4 erzeugen auf der jeweiligen Gleichspannungsseite, d.h. am zugehörigen Energiespeicherkreis 5, eine Gleichspannung, wobei sich durch die Serienschaltung der Energiespeicherkreise 5 die Gleichspannungen addieren, so dass sich vorteilhaft eine hohe Gesamtgleichspannung über den Energiespeicherkreisen 5 ergibt. Ein Transformator zur Erzeugung einer hohen Wechselspannung wird dadurch überflüssig und kann vorteilhaft eingespart werden. Zudem reduziert sich die Anzahl und der Querschnitt der nötigen Kabel, die zum Anschlusspunkt des Energiesystems verlegt werden müssen. Mit Hilfe einer Mittelspannungs-Gleichstrom-Übertragung oder einer Hochspannungs-Gleichstrom-Übertragung (HGÜ) lässt sich beispielsweise dann die diesbezügliche elektrische Energie verlustarm und effizient weitertransportieren, insbesondere bei einem Windenergiesystem oder bei einem Gezeitenkraftenergiesystem dann beispielsweise ans Festland. Da das erfindungsgemässe Energiesystem keinen Transformator aufweist, entfällt auch eine aufwendige Installation und Wartung, wodurch das Energiesystem insgesamt einfacher und robuster wird und sich durch eine hohe Verfügbarkeit auszeichnet. Die Gleichrichtereinheiten 4 sind jeweils als zwei Halbbrückenschaltungen, d.h. eine Vollbrückenschaltung, realisiert. Gemäss der ersten Ausführungsform des erfindungsgemässen Energiesystems nach Fig. 1, aber auch nach einer zweiten, dritten und vierten Ausführungsform gemäss Fig. 2 bzw. Fig. 3 bzw. Fig. 4, auf die nachfolgend noch detailliert eingegangen wird, ist allgemein jede Gleichrichtereinheit 4 als aktive Gleichrichtereinheit 4 mit ansteuerbaren Leistungshalbleiterschaltern ausgebildet, d.h. die Vollbrückenschaltung umfasst ansteuerbare Leistungshalbleiterschalter. Der Vorteil der aktiven Gleichrichtereinheit 4 besteht in der besseren Regelbarkeit des Generators 2 bei Lastwechsel durch z.B. Windböen oder Strömungsänderungen. Weiterhin ist es möglich, den Generator 4 motorisch anzutreiben, um den Rotorstern zur Rotorblattmontage zu positionieren. Als Alternative und weitere Vereinfachung, vor allem um den Ansteueraufwand zu reduzieren, ist es auch denkbar, dass allgemein jede Gleichrichtereinheit 4 als passive Gleichrichtereinheit 4 mit passiven nicht-ansteuerbaren Leistungshalbleiterschaltern ausgebildet ist, d.h. die Vollbrückenschaltung umfasst lediglich passive nicht-ansteuerbare Leistungshalbleiterschalter, wie zum Beispiel Leistungsdioden. Ist die Gleichrichtereinheit 4 als passive Gleichrichtereinheit 4 ausgebildet und der Generator beispielsweise als Permanentmagnetmaschine realisiert, so ist vorzugsweise ein Kondensator 8 seriell zwischen Statorwicklung 3 und passiver Gleichrichtereinheit 4 eingeschaltet, wodurch ein Betrieb mit hohem Leistungsfaktor erzielt werden kann. In einer vierten Ausführungsform nach Fig. 4 ist die Verschaltung eines solchen Kondensators 8 dargestellt. Weiterhin ist es denkbar, dass jede Gleichrichtereinheit 4 allgemein als Mehrpunktstromrichter zur Schaltung einer Vielzahl an Schaltspannungsniveaus ausgebildet ist.

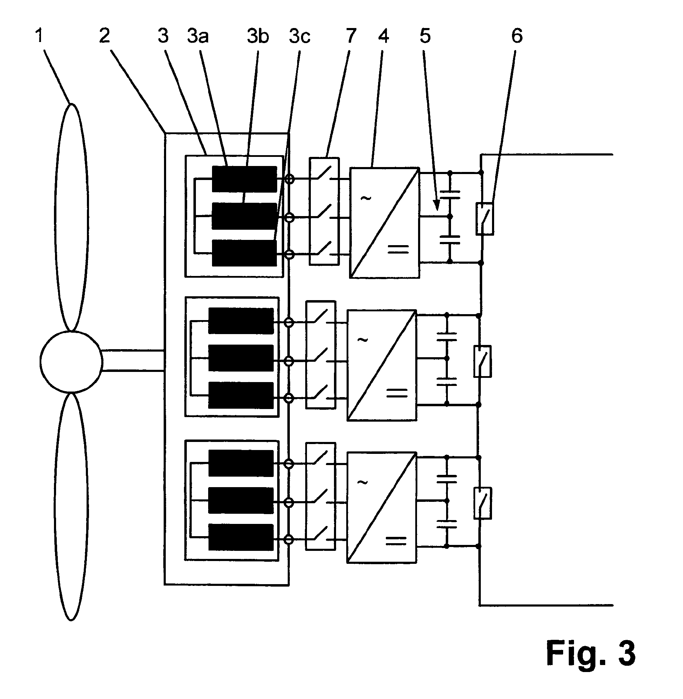

Gemäss Fig. 1 weist der Energiespeicherkreis 5 einen kapazitiven Energiespeicher auf, wodurch ein äusserst einfacher Energiespeicherkreis realisiert werden kann. Alternativ dazu ist es gemäss der zweiten Ausführungsform des erfindungsgemässen Energiesystems nach Fig. 2 sowie nach der dritten Ausführungsform des erfindungsgemässen Energiesystems gemäss Fig. 3 auch denkbar, dass der Energiespeicherkreis 5 einen ersten kapazitiven Energiespeicher und einen zu dem ersten kapazitiven Energiespeicher in Serie geschalteten zweiten kapazitiven Energiespeicher aufweist, wodurch mit Vorteil eine höhere Gleichspannung pro Energiespeicherkreis 5 erzielt werden kann.

Gemäss Fig. 2 weist jede Statorwicklung 3 einen ersten Anschluss A und einen zweiten Anschluss B auf, wobei der erste Anschluss A mit der Wechselspannungsseite der zugeordneten Gleichrichtereinheit 4 verbunden ist und der zweite Anschluss B mit dem Verbindungspunkt des ersten kapazitiven Energiespeichers mit dem zweiten kapazitiven Energiespeicher verbunden ist. Vorzugsweise kann die jeweilige Gleichrichtereinheit 4 nach Fig. 2 als eine einzige Halbbrückenschaltung realisiert werden, so dass sich Leistungshalbleiterschalter bezüglich der jeweiligen Gleichrichtereinheit 4, welche als Vollbrückenschaltung realisiert ist, einsparen lassen. Insgesamt vereinfacht sich dadurch das Energiesystem weiter.

Gemäss Fig. 3 ist jede Statorwicklung 3 durch drei Teilwicklungen 3a, 3b, 3c gebildet und jede Teilwicklung 3a, 3b, 3c ist mit der Wechselspannungsseite der der zugehörigen Statorwicklung 3 zugeordneten Gleichrichtereinheit 4 verbunden. Vorzugsweise sind die drei Teilwicklungen 3a, 3b, 3c in Sternschaltung geschaltet, wie in Fig. 3 gezeigt.

Im Fehlerfall beispielsweise einer Gleichrichtereinheit 4 ist gemäss Fig. 1, Fig. 2, Fig. 3 und Fig. 4 zu jedem Energiespeicherkreis 5 ein Kurzschlussmittel 6 parallel geschaltet, welches Kurzschlussmittel 6 dann den Kurzschluss des zugehörigen Energiespeicherkreises 5 erlaubt. Ein Weiterbetrieb des Energiesystems ist vorteilhaft möglich, wobei die Gesamtgleichspannung über sämtlichen Energiespeicherkreisen 5 dann natürlich reduziert ist. Die Reduktion der Gesamtgleichspannung im Fehlerfall kann durch geeignete Auslegung des Energiesystems verhindert werden, so dass selbst beim Kurzschluss eines G Energiespeicherkreises 5 mit den verbleibenden Gleichrichtereinheiten 4 die Nenngesamtgleichspannung erzeugt werden kann. Darüber hinaus ist nach Fig. 1, Fig. 2, Fig. 3 und Fig. 4 in jede Verbindung zu der Statorwicklung 3 ein Trennmittel 7 eingeschaltet, wobei das Trennmittel 7 der galvanischen Abtrennung der Statorwicklung 3 dient. Im Fehlerfall beispielsweise an einer Statorwicklung 3 kann diese mit Vorteil abgetrennt werden. Weiterhin kann durch Kurzschluss eines Energiespeicherkreises 5 mittels des zugehörigen Kurzschlussmittels 6 und durch gleichzeitige Abtrennung der zugehörigen Statorwicklung 3 mittels des Trennmittels 7 die zugehörige Gleichrichtereinheit 4 beispielsweise zu Wartungs- oder Prüfzwecken und/oder zu deren Austausch isoliert werden.

### Bezugszeichenliste

- 1: Windkraftturbine oder Wasserkraftturbine
- 2: Generator
- 3: Statorwicklung
- 3a, 3b, 3c: Teilwicklungen der Statorwicklung
- 4: Gleichrichtereinheit
- 5: Energiespeicherkreis
- 6: Kurzschlussmittel
- 7: Trennmittel
- 8: Kondensator

## Patentansprüche

1. Energiesystem umfassend
eine Windkraftturbine (1) oder Wasserkraftturbine (1), welche mit einem Generator (2) verbunden ist, wobei der Generator (2) mindestens zwei Statorwicklungen (3) aufweist und jeder Statorwicklung (3) jeweils eine Gleichrichtereinheit (4) zugeordnet ist und jede Statorwicklung (3) mit der Wechselspannungsseite der zugeordneten Gleichrichtereinheit (4) verbunden ist,
**dadurch gekennzeichnet,**
**dass** jeder Gleichrichtereinheit (4) jeweils ein Energiespeicherkreis (5) zugeordnet ist und jede Gleichrichtereinheit (4) an der Gleichspannungsseite mit dem zugeordneten Energiespeicherkreis (5) parallel verbunden ist, und
**dass** die Energiespeicherkreise (5) seriell miteinander verbunden sind.

2. Energiesystem nach Anspruch 1, **dadurch gekennzeichnet, dass** der Energiespeicherkreis (5) einen kapazitiven Energiespeicher aufweist.

3. Energiesystem nach Anspruch 1, **dadurch gekennzeichnet, dass** der Energiespeicherkreis (5) einen ersten kapazitiven Energiespeicher und einen zu dem ersten kapazitiven Energiespeicher in Serie geschalteten zweiten kapazitiven Energiespeicher aufweist.

4. Energiesystem nach Anspruch 3, **dadurch gekennzeichnet, dass** jede Statorwicklung (3) einen ersten Anschluss (A) und einen zweiten Anschluss (B) aufweist, und
dass der erste Anschluss (A) mit der Wechselspannungsseite der zugeordneten Gleichrichtereinheit (4) verbunden ist und der zweite Anschluss (B) mit dem Verbindungspunkt des ersten kapazitiven Energiespeichers mit dem zweiten kapazitiven Energiespeicher verbunden ist.

5. Energiesystem nach einem der Ansprüche 1 bis 3, **dadurch gekennzeichnet, dass** jede Statorwicklung (3) durch drei Teilwicklungen (3a, 3b, 3c) gebildet ist, und
dass jede Teilwicklung (3a, 3b, 3c) mit der Wechselspannungsseite der der zugehörigen Statorwicklung (3) zugeordneten Gleichrichtereinheit (4) verbunden ist.

6. Energiesystem nach einem der Ansprüche 1 bis 5, **dadurch gekennzeichnet, dass** zu jedem Energiespeicherkreis (5) ein Kurzschlussmittel (6) parallel geschaltet ist.

7. Energiesystem nach einem der Ansprüche 1 bis 6, **dadurch gekennzeichnet, dass** in jede Verbindung zu der Statorwicklung (3) ein Trennmittel (7) eingeschaltet ist, wobei das Trennmittel (7) der galvanischen Abtrennung der Statorwicklung (3) dient.

8. Energiesystem nach einem der Ansprüche 1 bis 7, **dadurch gekennzeichnet, dass** jede Gleichrichtereinheit (4) als aktive Gleichrichtereinheit (4) mit ansteuerbaren Leistungshalbleiterschaltern ausgebildet ist.

9. Energiesystem nach einem der Ansprüche 1 bis 7, **dadurch gekennzeichnet, dass** jede Gleichrichtereinheit (4) als passive Gleichrichtereinheit (4) mit passiven nicht-ansteuerbaren Leistungshalbleiterschaltern ausgebildet ist.

10. Energiesystem nach Anspruch 9, **dadurch gekennzeichnet, dass** ein Kondensator (8) seriell zwischen Statorwicklung (3) und passiver Gleichrichtereinheit (4) eingeschaltet ist.

11. Energiesystem nach einem der Ansprüche 8 bis 10, **dadurch gekennzeichnet, dass** jede Gleichrichtereinheit (4) als Mehrpunktstromrichter zur Schaltung einer Vielzahl an Schaltspannungsniveaus ausgebildet ist.

## Claims

1. Energy system comprising
a wind power turbine (1) or water power turbine (1), which is connected to a generator (2), with the generator (2) having at least two stator windings (3) and a respective rectifier unit (4) is associated with each stator winding (3), and with each stator winding (3) is connected to the AC voltage side of the associated rectifier unit (4),
**characterized in that**
each rectifier unit (4) has a respective associated energy storage circuit (5), and each rectifier unit (4) is connected on the DC voltage side to the associated energy storage circuit (5), and
**in that** the energy storage circuits (5) are connected to one another in series.

2. Energy system according to Claim 1, **characterized in that** the energy storage circuit (5) has a capacitive energy store.

3. Energy system according to Claim 1, **characterized in that** the energy storage circuit (5) has a first capacitive energy store and a second capacitive energy store, which is connected in series with the first capacitive energy store.

4. Energy system according to Claim 3, **characterized in that** each stator winding (3) has a first connection (A) and a second connection (B), and **in that** the first connection (A) is connected to the AC voltage side of the associated rectifier unit (4), and the second connection (B) is connected to the junction point of the first capacitive energy store and the second capacitive energy store.

5. Energy system according to one of Claims 1 to 3, **characterized in that** each stator winding (3) is formed by three winding elements (3a, 3b, 3c), and **in that** each winding element (3a, 3b, 3c) is connected to the AC voltage side of the rectifier unit (4) associated with the respective stator winding (3).

6. Energy system according to one of Claims 1 to 5, **characterized in that** a short-circuiting means (6) is connected in parallel with each energy storage circuit (5).

7. Energy system according to one of Claims 1 to 6, **characterized in that** an isolating means (7) is connected in each connection to the stator winding (3), with the isolating means (7) being used for galvanic isolation of the stator winding (3).

8. Energy system according to one of Claims 1 to 7, **characterized in that** each rectifier unit (4) is in the form of an active rectifier unit (4) with controllable power semiconductor switches.

9. Energy system according to one of Claims 1 to 7, **characterized in that** each rectifier unit (4) is in the form of a passive rectifier unit (4) with passive non-controllable power semiconductor switches.

10. Energy system according to Claim 9, **characterized in that** a capacitor (8) is connected in series between the stator winding (3) and the passive rectifier unit (4).

11. Energy system according to one of Claims 8 to 10, **characterized in that** each rectifier unit (4) is in the form of a multipoint converter for switching a multiplicity of switching voltage levels.

## Revendications

1. Système d'énergie comprenant une éolienne (1) ou une turbine hydraulique (1), reliée à une génératrice (2), la génératrice (2) comportant au moins deux bobines de stator (3) et chaque bobine de stator (3) étant associée respectivement à une unité de redressement (4) et chaque bobine de stator (3) étant reliée au côté de tension alternative de l'unité de redressement (4) associée ;
**caractérisé en ce que** :
chaque unité de redressement (4) est respectivement associée à un circuit d'accumulateur d'énergie (5) et
que chaque unité de redressement (4) est reliée en parallèle au niveau de chaque côté de tension continue au circuit d'accumulateur d'énergie (5) associé ; et
les circuits d'accumulateur d'énergie (5) sont reliés entre eux en série.

2. Système d'énergie selon la revendication 1, **caractérisé en ce que** le circuit d'accumulateur d'énergie (5) comporte un accumulateur d'énergie capacitif.

3. Système d'énergie selon la revendication 1, **caractérisé en ce que** le circuit d'accumulateur d'énergie (5) comporte un premier accumulateur d'énergie capacitif et un deuxième accumulateur d'énergie capacitif relié en série au premier accumulateur d'énergie capacitif.

4. Système d'énergie selon la revendication 3, **caractérisé en ce que** chaque bobine de stator (3) comporte un premier raccord (A) et un deuxième raccord (B) et que le premier raccord (A) est relié au côté de tension alternative de l'unité de redressement (4) associée et que le deuxième raccord (B) est relié au point de jonction du premier accumulateur d'énergie capacitif au deuxième accumulateur d'énergie capacitif.

5. Système d'énergie selon l'une quelconque des revendications 1 à 3, **caractérisé en ce que** chaque bobine de stator (3) est formée par trois parties de bobine (3a, 3b, 3c) et que chaque partie de bobine (3a, 3b, 3c) est reliée au côté de tension alternative de l'unité de redressement (4) associée à la bobine de stator (3) associée.

6. Système d'énergie selon l'une quelconque des revendications 1 à 5, **caractérisé en ce que** des moyens de court-circuitage (6) sont branchés en parallèle de chaque circuit d'accumulateur d'énergie (5).

7. Système d'énergie selon l'une quelconque des revendications 1 à 6, **caractérisé en ce qu'**un moyen de séparation (7) est branché dans chaque liaison avec la bobine de stator (3), le moyen de séparation (7) servant de séparation galvanique à la bobine de stator (3).

8. Système d'énergie selon l'une quelconque des revendications 1 à 7, **caractérisé en ce que** chaque unité de redressement (4) est réalisée sous la forme d'une unité de redressement (4) active avec des commutateurs à semi-conducteurs de puissance pilotables.

9. Système d'énergie selon l'une quelconque des revendications 1 à 7, **caractérisé en ce que** chaque unité de redressement (4) est réalisée sous la forme d'une unité de redressement (4) passive avec des commutateurs à semi-conducteurs de puissance non pilotables passifs.

10. Système d'énergie selon la revendication 9, **caractérisé en ce qu'**un condensateur (8) est branché en série entre la bobine de stator (3) et l'unité de redressement (4) passive.

11. Système d'énergie selon l'une quelconque des revendications 8 à 10, **caractérisé en ce que** chaque unité de redressement (4) est réalisée sous la forme d'un redresseur multipoint permettant de raccorder une pluralité de niveaux de tensions de coupure.
